# EUROPEAN PATENT APPLICATION

(11) **EP 3 506 047 A1**
(43) Date of publication of application: **03.07.2019**
(21) Application number: 19153821.4
(22) Date of filing: 08.07.2015
(51) Int. Cl.: G06F 1/16, G06F 3/041, G06F 3/0488, G06F 3/039

(54) **ELECTRONIC DEVICE, METHOD OF PROVIDING INTERFACE OF THE SAME, AND ACCESSORY FOR THE SAME**

(30) Priority: 08.07.2014 KR 20140084947
(62) Divisional of application: 15175804.2
(71) Applicant: Samsung Electronics Co., Ltd., Suwon-si, Gyeonggi-do, 16677 (KR)
(72) Inventor: Bang, Hyosik, Gyeonggi-do 16677 (KR)
(74) Representative: Nederlandsch Octrooibureau

(57) **Abstract**

An accessory, electronic device and method for using the same are disclosed herein. The accessory may include a plurality of flexible structures formed in the top surface, each of the plurality deformable in response to external pressure to cause a respective portion of the bottom surface to contact the electronic device, and return to an original shape when the external pressure is removed. The electronic device may include a processor, which may execute the method including when an accessory comprising at least one physical key is mounted on a touch screen of the electronic device, detecting by a processor of the electronic device a location of the accessory on the touch screen, and displaying on a display of the electronic device a virtual keypad in the detected location of the accessory.

## Description

### BACKGROUND

The present disclosure relates to an electronic device, a method of providing an interface of the same, and an accessory for the same.

### TECHNICAL FIELD

Electronic devices such as a recently developed smart phone, tablet Personal Computer (PC), Portable Multimedia Player (PMP), Personal Digital Assistant (PDA), Laptop PC, or wearable device may provide various functions (e.g., game playing, Social Network Service (SNS), Internet searching, multimedia viewing, or picture or moving picture photographing or reproduction) as well as mobility.

In order to receive a user input, an electronic device may receive a touch input or may receive and process the user input through a specific key button thereof. In order to receive a touch input, the electronic device provides an interface in which the user may visually recognize, and the user should input a touch to the electronic device depending on visual sense.

### SUMMARY

The present disclosure has been made in view of the above problems, and provides an accessory mounted in an electronic device to support a key input to the electronic device and a method of providing an interface of the electronic device in which the accessory is mounted.

In one aspect of the present disclosure, an accessory device is disclosed, including a main body including a top surface and a bottom surface, at least one fastener formed in the bottom surface and configured to detachably secure the main body to an electronic device, a plurality of flexible structures formed in the top surface, each of the plurality deformable in response to external pressure to cause a respective portion of the bottom surface to contact the electronic device, and return to an original shape when the external pressure is removed, and at least one of a conductor pattern or Integrated Circuit (IC) disposed within one or more of each of the plurality of flexible structures and the at least one fastener.

In another aspect of the present disclosure, a method in an electronic device is disclosed, including: when an accessory comprising at least one physical key is mounted on a touch screen of the electronic device, detecting by a processor of the electronic device a location of the accessory on the touch screen, and displaying on a display of the electronic device a virtual keypad in the detected location of the accessory.

In another aspect of the present disclosure, an electronic device is disclosed, including a communication module, a touch screen, and a processor, configured to: detect contact of an accessory including at least one structure corresponding to an input key on the touch screen, detect a location of the accessory on the touch screen, and display a user interface on the touch screen according to the detected location of the accessory, the displayed user interface including a virtual key displayed on the touch screen corresponding to the input key of the accessory.

In another aspect of the present disclosure, a system is disclosed, including: a first electronic device configured to: detect a location of an accessory mounted on a touch screen of the first electronic device, the accessory including at least one physical key, display a virtual keypad on the touch screen in the detected location, and detect a touch input to a virtual key of the virtual keypad generated by activation of the physical key of the accessory and transmit information of the touch input to the virtual key to a second electronic device, and the second electronic device configured to: receive the transmitted information and execute an operation according to the received information.

### BRIEF DESCRIPTION OF THE DRAWINGS

The present disclosure will be more apparent from the following detailed description in conjunction with the accompanying drawings, in which:
FIG. 1 is a block diagram illustrating a network environment including an electronic device according to various example embodiments of the present disclosure;
FIG. 2 is a block diagram illustrating a configuration of an electronic device according to various example embodiments of the present disclosure;
FIG. 3A and FIG. 3B are diagrams illustrating an accessory according to various example embodiments of the present disclosure;
FIG. 4A, FIG. 4B, and FIG. 4C are cross-sectional views illustrating an accessory according to various example embodiments of the present disclosure;
FIGS. 5A and FIG. 5B are diagrams illustrating an electronic device in which an accessory is mounted according to various example embodiments of the present disclosure;
FIG. 6 is a flowchart illustrating a method of providing an interface of an electronic device according to various example embodiments of the present disclosure;
FIG. 7 is a diagram illustrating a communication method between an electronic device in which an accessory is mounted and another electronic device according to various example embodiments;
FIG. 8 is a message flow diagram illustrating a communication method between an electronic device in which an accessory is mounted and another electronic device according to various example embodiments;
FIG. 9 is a flowchart illustrating a method of providing an interface of an electronic device according to various example embodiments of the present disclosure;
FIG. 10 is a diagram illustrating a method of providing an interface of an electronic device according to various example embodiments of the present disclosure;
FIG. 11 is a diagram illustrating an accessory according to various example embodiments of the present disclosure;
FIG. 12 is a flowchart illustrating a method of providing an interface of an electronic device according to an example embodiment of the present disclosure;
FIG. 13 is a diagram illustrating a method of providing an interface of an electronic device according to an example embodiment of the present disclosure;
FIG. 14 is a diagram illustrating an electronic device in which an accessory is mounted according to various example embodiments of the present disclosure;
FIG. 15 is a diagram illustrating an electronic device in which an accessory is mounted according to various example embodiments of the present disclosure;
FIG. 16 is a flowchart illustrating a method of providing an interface of an electronic device according to an example embodiment of the present disclosure;
FIG. 17 is a diagram illustrating a method of providing an interface of an electronic device according to an example embodiment of the present disclosure; and
FIG. 18 is a diagram illustrating an electronic device in which an accessory is mounted according to various example embodiments of the present disclosure.

### DETAILED DESCRIPTION

Hereinafter, the present disclosure will be described with reference to the accompanying drawings. Although specific embodiments are illustrated in the drawings and related detailed descriptions are discussed in the present specification, the present disclosure may have various modifications and several embodiments. However, various embodiments of the present disclosure are not limited to a specific implementation form and it should be understood that the present disclosure includes all changes and/or equivalents and substitutes included in the various embodiments of the present disclosure. In connection with descriptions of the drawings, similar components are designated by the same reference numeral.

The term "include" or "may include" which may be used in describing various embodiments of the present disclosure refers to the existence of a corresponding disclosed function, operation or component which can be used in various embodiments of the present disclosure and does not limit one or more additional functions, operations, or components. In various embodiments of the present disclosure, the terms such as "include" or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

In various embodiments of the present disclosure, the expression "or" or "at least one of A or/and B" includes any or all of combinations of words listed together. For example, the expression "A or B" or "at least A or/and B" may include A, may include B, or may include both A and B.

The expression "1", "2", "first", or "second" used in various embodiments of the present disclosure may modify various components of the various embodiments but does not limit the corresponding components. For example, the above expressions do not limit the sequence and/or importance of the components. The expressions may be used for distinguishing one component from other components. For example, a first user device and a second user device indicate different user devices although both of them are user devices. For example, without departing from the present disclosure, a first structural element may be referred to as a second structural element. Similarly, the second structural element also may be referred to as the first structural element.

When it is stated that a component is "coupled to" or "connected to" another component, the component may be directly coupled or connected to another component or a new component may exist between the component and another component. In contrast, when it is stated that a component is "directly coupled to" or "directly connected to" another component, a new component does not exist between the component and another component.

The terms used in describing various embodiments of the present disclosure are only examples for describing a specific embodiment but do not limit the various embodiments of the present disclosure. Singular forms are intended to include plural forms unless the context clearly indicates otherwise.

Unless defined differently, all terms used herein, which include technical terminologies or scientific terminologies, have the same meaning as that understood by a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present description.

An electronic device according to various embodiments of the present disclosure may be a device including a communication function. For example, the electronic device may be one or a combination of a smart phone, a tablet Personal Computer (PC), a mobile phone, a video phone, an e-book reader, a desktop PC, a laptop PC, a netbook computer, a Personal Digital Assistant (PDA), a camera, a wearable device (for example, a Head-Mounted-Device (HMD) such as electronic glasses, electronic clothes, and electronic bracelet, an electronic necklace, an electronic appcessary, an electronic tattoo, and a smart watch.

According to some embodiments, the electronic device may be a smart home appliance having a communication function. The smart home appliance may include at least one of a TeleVision (TV), a Digital Video Disk (DVD) player, an audio player, an air conditioner, a cleaner, an oven, a microwave oven, a washing machine, an air cleaner, a set-top box, a TV box (for example, Samsung HomeSync™, Apple TV™, or Google TV™), game consoles, an electronic dictionary, an electronic key, a camcorder, or an electronic frame.

According to some embodiments, the electronic device may include at least one of various types of medical devices (for example, Magnetic Resonance Angiography (MRA), Magnetic Resonance Imaging (MRI), Computed Tomography (CT), a scanner, an ultrasonic device and the like), a navigation device, a Global Positioning System (GPS) receiver, an Event Data Recorder (EDR), a Flight Data Recorder (FDR), a vehicle infotainment device, electronic equipment for a ship (for example, a navigation device for ship, a gyro compass and the like), avionics, a security device, a head unit for a vehicle, an industrial or home robot, an Automatic Teller Machine (ATM) of financial institutions, or a Point Of Sale (POS) device of shops.

According to some embodiments, the electronic device may include at least one of furniture or a part of a building/structure, an electronic board, an electronic signature receiving device, a projector, or various types of measuring devices (for example, a water meter, an electricity meter, a gas meter, a radio wave meter and the like) including a camera function. The electronic device according to various embodiments of the present disclosure may be one or a combination of the above described various devices. Further, the electronic device according to various embodiments of the present disclosure may be a flexible device. It is apparent to those skilled in the art that the electronic device according to various embodiments of the present disclosure is not limited to the above described devices.

Hereinafter, an electronic device according to various embodiments of the present disclosure will be described with reference to the accompanying drawings. The term "user" used in various embodiments may refer to a person who uses an electronic device or a device (for example, an artificial intelligence electronic device) which uses an electronic device.

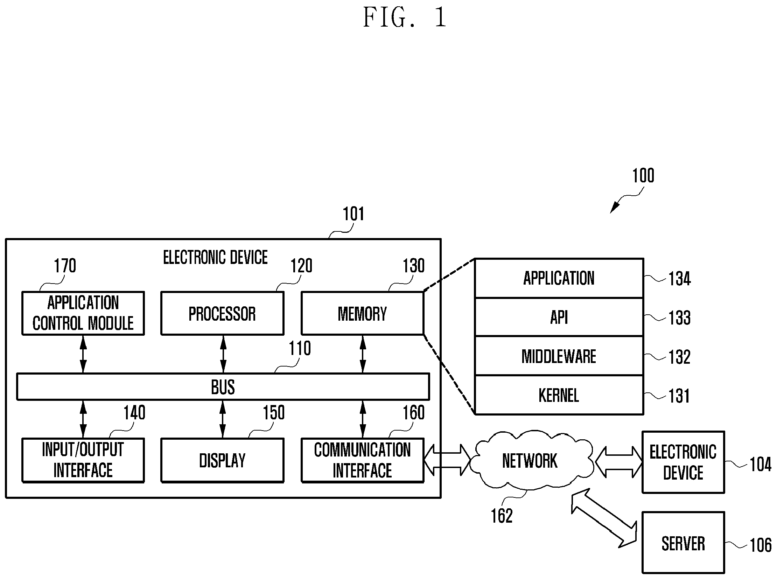

FIG. 1 illustrates a network environment 100 including an electronic device 101 according to various embodiments of the present disclosure. Referring to FIG. 1, the electronic device 101 includes a bus 110, a processor 120, a memory 130, an input/output interface 140, a display 150, a communication interface 160, and a communication control module 170.

The bus 110 may be a circuit connecting the above described components and transmitting communication (for example, a control message) between the above described components.

The processor 120 receives commands from other components (for example, the memory 130, the input/output interface 140, the display 150, the communication interface 160, or the communication control module 170) through the bus 110, analyzes the received commands, and executes calculation or data processing according to the analyzed commands.

The memory 130 stores commands or data received from the processor 120 or other components (for example, the input/output interface 140, the display 150, the communication interface 160, or the communication control module 170) or generated by the processor 120 or other components. The memory 130 may include programming modules, for example, a kernel 131, middleware 132, an Application Programming Interface (API) 133, and an application 134. Each of the aforementioned programming modules may be implemented by software, firmware, hardware, or a combination of two or more thereof.

The kernel 131 controls or manages system resources (for example, the bus 110, the processor 120, or the memory 130) used for executing an operation or function implemented by the remaining other programming modules, for example, the middleware 132, the API 133, or the application 134. Further, the kernel 131 provides an interface for accessing individual components of the electronic device 101 from the middleware 132, the API 133, or the application 134 to control or manage the components.

The middleware 132 performs a relay function of allowing the API 133 or the application 134 to communicate with the kernel 131 to exchange data. Further, in operation requests received from the application 134, the middleware 132 performs a control for the operation requests (for example, scheduling or load balancing) by using a method of assigning a priority, by which system resources (for example, the bus 110, the processor 120, the memory 130 and the like) of the electronic device 101 can be used, to the application 134.

The API 133 is an interface by which the application 134 can control a function provided by the kernel 131 or the middleware 132 and includes, for example, at least one interface or function (for example, command) for a file control, a window control, image processing, or a character control.

According to various embodiments, the application 134 may include a Short Message Service (SMS)/Multimedia Messaging Service (MMS) application, an email application, a calendar application, an alarm application, a health care application (for example, application measuring quantity of exercise or blood sugar) or an environment information application (for example, application providing information on barometric pressure, humidity or temperature). Additionally or alternatively, the application 134 may be an application related to an information exchange between the electronic device 101 and an external electronic device (for example, electronic device 104). The application related to the information exchange may include, for example, a notification relay application for transferring particular information to the external electronic device or a device management application for managing the external electronic device.

For example, the notification relay application may include a function of transmitting notification information generated by another application (for example, an SMS/MMS application, an email application, a health care application or an environment information application) of the electronic device 101 to the external electronic device (for example, electronic device 104). Additionally or alternatively, the notification relay application may receive notification information from, for example, the external electronic device 104 and provide the received notification information to the user. The device management application may manage (for example, install, remove, or update) at least a part of functions (for example, turning on/off the external electronic device (or some components of the external electronic device) or controlling a brightness of the display) of the external electronic device (104 communicating with the electronic device 101, an application executed in the external electronic device 104, or a service (for example, call service or message service) provided by the external electronic device 104.

According to various embodiments, the application 134 may include an application designated according to an attribute (for example, type of electronic device) of the external electronic device 104. For example, when the external electronic device 104 is an MP3 player, the application 134 may include an application related to music reproduction. Similarly, when the external electronic device 104 is a mobile medical device, the application 134 may include an application related to health care. According to an embodiment, the application 134 may include at least one of an application designated to the electronic device 101 or an application received from an external electronic device (for example, server 106 or electronic device 104).

The input/output interface 140 transmits a command or data input from the user through an input/output device (for example, a sensor, a keyboard, or a touch screen) to the processor 120, the memory 130, the communication interface 160, or the application control module 170 through, for example, the bus 110. For example, the input/output interface 140 may provide data on a user's touch input through a touch screen to the processor 120. Further, the input/output interface 140 may output a command or data received, through, for example, the bus 110, from the processor 120, the memory 130, the communication interface 160, or the communication control module 170 through the input/output device (for example, a speaker or a display). For example, the input/output interface 140 may output voice data processed through the processor 120 to the user through the speaker.

The display 150 displays various pieces of information (for example, multimedia data, text data, or the like) for the user.

The communication interface 160 connects communication between the electronic device 101 and the external device (for example, electronic device 104 or server 106). For example, the communication interface 160 may access a network 162 through wireless or wired communication to communicate with the external device. The wireless communication includes at least one of, for example, WiFi, BlueTooth (BT), Near Field Communication (NFC), a Global Positioning System (GPS), or cellular communication (for example, LTE, LTE-A, CDMA, WCDMA, UMTS, WiBro or GSM). The wired communication may include at least one of, for example, a Universal Serial Bus (USB), a High Definition Multimedia Interface (HDMI), Recommended Standard 232 (RS-232), or a Plain Old Telephone Service (POTS).

According to an embodiment, the network 162 may be a telecommunication network. The telecommunication network includes at least one of a computer network, Internet, Internet of things, and a telephone network. According to an embodiment, a protocol (for example, transport layer protocol, data link layer protocol, or physical layer protocol) for communication between the electronic device 101 and the external device may be supported by at least one of the application 134, the application programming interface 133, the middleware 132, the kernel 131, and the communication interface 160.

According to an embodiment, the server 106 supports driving of the electronic device 101 by performing at least one operation (or function) implemented by the electronic device 101. For example, the server 106 may include a communication control server module 108 that supports the communication control module 170 implemented in the electronic device 101. For example, the communication control server module 108 may include at least one of the components of the communication control module 170 to perform (on behalf of) at least one operations performed by the communication control module 170.

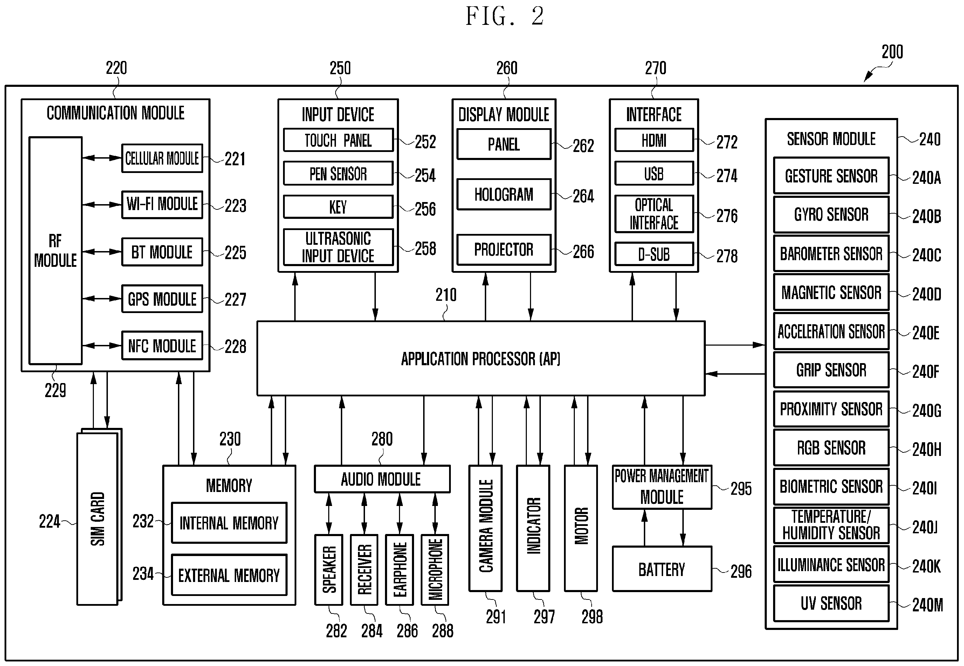

FIG. 2 is a block diagram of an electronic device 200 according to various embodiments of the present disclosure. The electronic device 200 may configure, for example, a whole or a part of the electronic device 101 illustrated in FIG. 1. Referring to FIG. 2, the electronic device 200 includes one or more Application Processors (APs) 210, a communication module 220, a Subscriber Identification Module (SIM) card 224, a memory 230, a sensor module 240, an input device 250, a display 260, an interface 270, an audio module 280, a camera module 291, a power managing module 295, a battery 296, an indicator 297, and a motor 298.

The AP 210 operates an operating system (OS) or an application program so as to control a plurality of hardware or software component elements connected to the AP 210 and execute various data processing and calculations including multimedia data. The AP 210 may be implemented by, for example, a System on Chip (SoC). According to an embodiment, the processor 210 may further include a Graphic Processing Unit (GPU).

The communication module 220 (for example, communication interface 160) transmits/receives data in communication between different electronic devices (for example, the electronic device 104 and the server 106) connected to the electronic device 200 (for example, electronic device 101) through a network. According to an embodiment, the communication module 220 includes a cellular module 221, a WiFi module 223, a BlueTooth (BT) module 225, a Global Positioning System (GPS) module 227, a Near Field Communication (NFC) module 228, and a Radio Frequency (RF) module 229.

The cellular module 221 provides a voice, a call, a video call, a Short Message Service (SMS), or an Internet service through a communication network (for example, Long Term Evolution (LTE), LTE-A, Code Division Multiple Access (CDMA), Wideband CDMA (WCDMA), UMTS, WiBro, GSM or the like). Further, the cellular module 221 may distinguish and authenticate electronic devices within a communication network by using a subscriber identification module (for example, the SIM card 224). According to an embodiment, the cellular module 221 performs at least some of the functions which can be provided by the AP 210. For example, the cellular module 221 may perform at least some of the multimedia control functions.

According to an embodiment, the cellular module 221 may include a Communication Processor (CP). Further, the cellular module 221 may be implemented by, for example, an SoC.

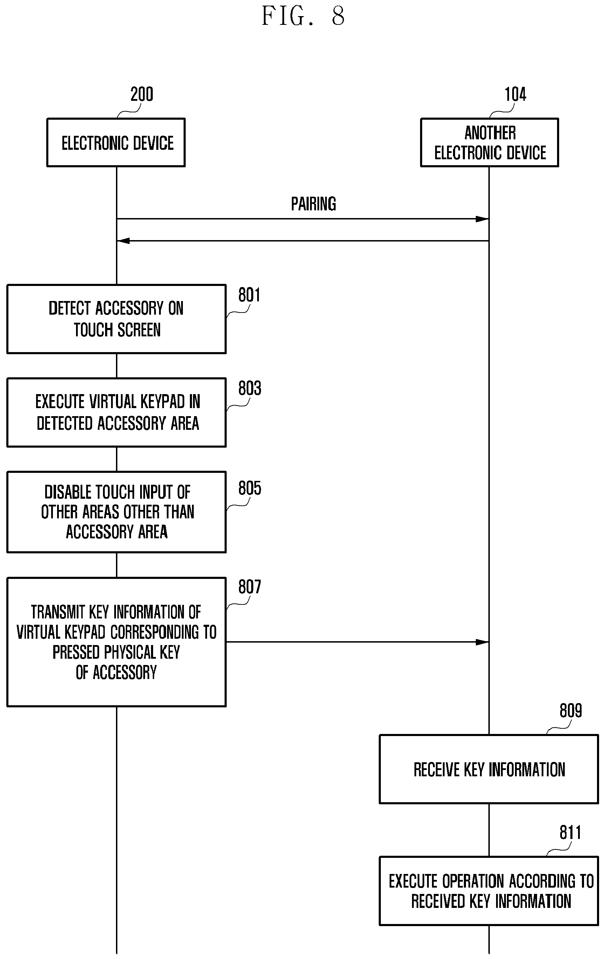

Although the components such as the cellular module 221 (for example, communication processor), the memory 230, and the power managing module 295 are illustrated as components separate from the AP 210 in FIG. 8, the AP 210 may include at least some (for example, cellular module 221) of the aforementioned components in an embodiment.

According to an embodiment, the AP 210 or the cellular module 221 (for example, communication processor) may load a command or data received from at least one of a non-volatile memory and other components connected to each of the AP 210 and the cellular module 221 to a volatile memory and process the loaded command or data. Further, the AP 210 or the cellular module 221 may store data received from at least one of other components or generated by at least one of other components in a non-volatile memory.

Each of the WiFi module 223, the BT module 225, the GPS module 227, and the NFC module 228 may include, for example, a processor for processing data transmitted/received through the corresponding module. Although the cellular module 221, the WiFi module 223, the BT module 225, the GPS module 227, and the NFC module 228 are illustrated as blocks separate from each other in FIG. 8, at least some (for example, two or more) of the cellular module 221, the WiFi module 223, the BT module 225, the GPS module 227, and the NFC module 228 may be included in one Integrated Chip (IC) or one IC package according to one embodiment. For example, at least some (for example, the communication processor corresponding to the cellular module 221 and the WiFi processor corresponding to the WiFi module 223) of the processors corresponding to the cellular module 221, the WiFi module 223, the BT module 225, the GPS module 227, and the NFC module 228 may be implemented by one SoC.

The RF module 229 transmits/receives data, for example, an RF signal. Although not illustrated, the RF module 229 may include, for example, a transceiver, a Power Amp Module (PAM), a frequency filter, a Low Noise Amplifier (LNA) or the like. Further, the RF module 229 may further include a component for transmitting/receiving electronic waves over a free air space in wireless communication, for example, a conductor, a conducting wire, or the like. Although the cellular module 221, the WiFi module 223, the BT module 225, the GPS module 227, and the NFC module 228 share one RF module 229 in FIG. 2, at least one of the cellular module 221, the WiFi module 223, the BT module 225, the GPS module 227, and the NFC module 228 may transmit/receive an RF signal through a separate RF module according to one embodiment.

The SIM card 224 is a card including a Subscriber Identification Module and may be inserted into a slot formed in a particular portion of the electronic device. The SIM card 224 includes unique identification information (for example, Integrated Circuit Card IDentifier (ICCID)) or subscriber information (for example, International Mobile Subscriber Identity (IMSI).

The memory 230 (for example, memory 130) may include an internal memory 232 or an external memory 234. The internal memory 232 may include, for example, at least one of a volatile memory (for example, a Random Access Memory (RAM), a dynamic RAM (DRAM), a static RAM (SRAM), a synchronous dynamic RAM (SDRAM), and the like), and a non-volatile Memory (for example, a Read Only Memory (ROM), a one time programmable ROM (OTPROM), a programmable ROM (PROM), an erasable and programmable ROM (EPROM), an electrically erasable and programmable ROM (EEPROM), a mask ROM, a flash ROM, a NAND flash memory, an NOR flash memory, and the like).

According to an embodiment, the internal memory 232 may be a Solid State Drive (SSD). The external memory 234 may further include a flash drive, for example, a Compact Flash (CF), a Secure Digital (SD), a Micro Secure Digital (Micro-SD), a Mini Secure Digital (Mini-SD), an extreme Digital (xD), or a memory stick. The external memory 234 may be functionally connected to the electronic device 200 through various interfaces. According to an embodiment, the electronic device 200 may further include a storage device (or storage medium) such as a hard drive.

The sensor module 240 measures a physical quantity or detects an operation state of the electronic device 200, and converts the measured or detected information to an electronic signal. The sensor module 240 may include, for example, at least one of a gesture sensor 240A, a gyro sensor 240B, an atmospheric pressure (barometric) sensor 240C, a magnetic sensor 240D, an acceleration sensor 240E, a grip sensor 240F, a proximity sensor 240G, a color sensor 240H (for example, Red, Green, and Blue "RGB", a biometric sensor 2401, a temperature/humidity sensor 240J, an illumination (light or illuminance) sensor 240K, and a Ultra Violet (UV) sensor 240M. Additionally or alternatively, the sensor module 240 may include, for example, a E-nose sensor, an electromyography (EMG) sensor, an electroencephalogram (EEG) sensor, an electrocardiogram (ECG) sensor, an InfraRed (IR) sensor, an iris sensor, a fingerprint sensor (not illustrated), and the like. The sensor module 240 may further include a control circuit for controlling one or more sensors included in the sensor module 240.

The input device 250 includes a touch panel 252, a (digital) pen sensor 254, a key 256, and an ultrasonic input device 258. For example, the touch panel 252 may recognize a touch input in at least one type of a capacitive type, a resistive type, an infrared type, and an acoustic wave type. The touch panel 252 may further include a control circuit. In the capacitive type, the touch panel 252 can recognize proximity as well as a direct touch. The touch panel 252 may further include a tactile layer. In this event, the touch panel 252 provides a tactile reaction to the user.

The (digital) pen sensor 254 may be implemented, for example, using a method identical or similar to a method of receiving a touch input of the user, or using a separate recognition sheet. The key 256 may include, for example, a physical button, an optical key, or a key pad. The ultrasonic input device 258 is a device which can detect an acoustic wave by a microphone (for example, microphone 288) of the electronic device 200 through an input means generating an ultrasonic signal to identify data and can perform wireless recognition. According to an embodiment, the electronic device 200 receives a user input from an external device (for example, computer or server) connected to the electronic device 200 by using the communication module 220.

The display 260 (for example, display 150) includes a panel 262, a hologram device 264, and a projector 266. The panel 262 may be, for example, a Liquid Crystal Display (LCD) or an Active Matrix Organic Light Emitting Diode (AM-OLED). The panel 262 may be implemented to be, for example, flexible, transparent, or wearable. The panel 262 may be configured by the touch panel 252 and one module. The hologram device 264 shows a stereoscopic image in the air by using interference of light. The projector 266 projects light on a screen to display an image. For example, the screen may be located inside or outside the electronic device 200. According to an embodiment, the display 260 may further include a control circuit for controlling the panel 262, the hologram device 264, and the projector 266.

The interface 270 includes, for example, a High-Definition Multimedia Interface (HDMI) 272, a Universal Serial Bus (USB) 274, an optical interface 276, and a D-subminiature (D-sub) 278. The interface 270 may be included in, for example, the communication interface 160 illustrated in FIG. 1. Additionally or alternatively, the interface 290 may include, for example, a Mobile High-definition Link (MHL) interface, a Secure Digital (SD) card/Multi-Media Card (MMC), or an Infrared Data Association (IrDA) standard interface.

The audio module 280 bi-directionally converts a sound and an electronic signal. At least some components of the audio module 280 may be included in, for example, the input/output interface 140 illustrated in FIG. 1. The audio module 280 processes sound information input or output through, for example, a speaker 282, a receiver 284, an earphone 286, the microphone 288 or the like.

The camera module 291 is a device which can photograph a still image and a video. According to an embodiment, the camera module 291 may include one or more image sensors (for example, a front sensor or a back sensor), an Image Signal Processor (ISP) (not shown) or a flash (for example, an LED or xenon lamp).

The power managing module 295 manages power of the electronic device 200. Although not illustrated, the power managing module 295 may include, for example, a Power Management Integrated Circuit (PMIC), a charger Integrated Circuit (IC), or a battery or fuel gauge.

The PMIC may be mounted to, for example, an integrated circuit or an SoC semiconductor. A charging method may be divided into wired and wireless methods. The charger IC charges a battery and prevent over voltage or over current from flowing from a charger. According to an embodiment, the charger IC includes a charger IC for at least one of the wired charging method and the wireless charging method. The wireless charging method may include, for example, a magnetic resonance method, a magnetic induction method and an electromagnetic wave method, and additional circuits for wireless charging, for example, circuits such as a coil loop, a resonant circuit, a rectifier or the like may be added.

The battery fuel gauge measures, for example, a remaining quantity of the battery 296, or a voltage, a current, or a temperature during charging. The battery 296 may store or generate electricity and supply power to the electronic device 200 by using the stored or generated electricity. The battery 296 may include a rechargeable battery or a solar battery.

The indicator 297 shows particular statuses of the electronic device 200 or a part (for example, AP 210) of the electronic device 200, for example, a booting status, a message status, a charging status and the like. The motor 298 converts an electrical signal to a mechanical vibration.

Although not illustrated, the electronic device 200 may include a processing unit (for example, GPU) for supporting a module TV. The processing unit for supporting the mobile TV may process, for example, media data according to a standard of Digital Multimedia Broadcasting (DMB), Digital Video Broadcasting (DVB), media flow or the like.

Each of the components of the electronic device according to various embodiments of the present disclosure may be implemented by one or more components and the name of the corresponding component may vary depending on a type of the electronic device. The electronic device according to various embodiments of the present disclosure may include at least one of the above described components, a few of the components may be omitted, or additional components may be further included. Also, some of the components of the electronic device according to various embodiments of the present disclosure may be combined to form a single entity, and thus may equivalently execute functions of the corresponding components before being combined.

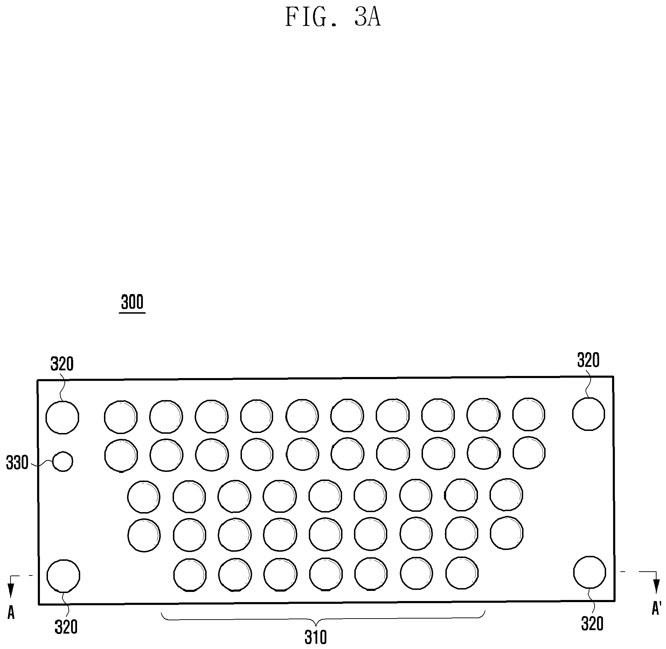

FIGS. 3A to 3B are diagrams illustrating accessories 300 and/or 301 according to various example embodiments of the present disclosure. In FIG. 3A, the accessory 300 may include at least one physical key 310, at least one attachment pad 320, or at least one recognition point 330.

According to an example embodiment, the accessory 300 may be a flexible material that can be attached to the electronic device 200. In order to transmit an image displayed in the electronic device 200, the accessory 300 may be made of a transparent or translucent material. For example, a material of the accessory 300 may be silicon or plastic.

For example, when the electronic device 200 is a tablet PC, the accessories 300 and/or 301 may be smaller than a horizontal and a vertical span of the tablet PC, or may have the same horizontal size and/or vertical span of the tablet PC. For example, a horizontal size of the accessories 300 and/or 301 may be larger than a vertical size thereof, and the accessories 300 and/or 301 may be shaped similarly to a general-purpose keyboard.

According to an example embodiment, in order to be attached to the electronic device 200, the accessory 300 may form at least one fastener, such as an adsorption port (or an adsorption area) at a rear surface thereof. In order to attach the accessory 300 to the electronic device 200, when a user puts and presses the accessory 300 on the electronic device 200, air in an adsorption port formed at the rear surface of the accessory 300 is discharged to the outside and thus at the inside of the adsorption port, an quantity of air pressure is formed. In this case, a difference between an air pressure formed within the adsorption port and the environmental atmospheric pressure, the accessory 300 may be securely attached to (or securely positioned in close contact with) the electronic device 200.

According to an example embodiment of the present disclosure, in order to be attached to the electronic device 200, the accessory 300 may include a bonding member at a rear surface, or at a rear surface of the accessory 300, a bonding member may be coated.

The adsorption port may be a device using for attaching to any suitable surface, such as glass or a tile without using a mechanical fastener or an adhesive, utilizing a principle of suction.

According to an example embodiment of the present disclosure, at least one physical key 310 of the accessory 300 may include a physical shape at an upper surface so that the user may detect the key 310 with tactile sense. For example, at least one physical key 310 of the accessory 300 may extend from a surface of the accessory 300 so that the user may detect the key 310 with tactile sense.

For example, at least one physical key 310 of the accessory 300 may include a concave surface or a convex surface so that the user may detect the key 310 with tactile sense.

According to an example embodiment, the accessory 300 may include a conductor so that the touch panel 252 may detect a touch input at a rear surface.

When the user presses at least one physical key 310, the conductor included in at least one physical key 310 of the accessory 300 may generate a touch input by contacting with the touch panel 252.

According to an example embodiment, even if the user does not press at least one attachment pad 320 or at least one recognition point 330, a conductor included in at least one attachment pad 320 or at least one recognition point 330 of the accessory 300 may generate a touch input by contacting with the touch panel 252.

At least one attachment pad 320 of the accessory 300 may perform a function of fixing the accessory 300 on the electronic device 200. At least one attachment pad 320 of the accessory 300 may generate a touch input by contacting with the touch panel 252, and by detecting a touch input occurring in at least one attachment pad 320, the electronic device 200 may detect an area in which the accessory 300 is located on the electronic device 200.

According to an example embodiment, at least one recognition point 330 of the accessory 300 may generate a touch input by contacting with the touch panel 252. At least one recognition point 330 of the accessory 300 may be located between, for example, at least two attachment pads 320. The electronic device 200 may detect a touch input that has occurred in at least one recognition point 330 located between the attachment pads 320. By detecting a touch input that has occurred in the attachment pad 320 or a touch input that has occurred at the recognition point 330, the electronic device 200 may grasp a vertical and lateral direction of the accessory 300 on the electronic device 200 and product information (e.g., a model name, a keypad form implemented in the accessory) of the accessory 300. For example, by detecting a touch input that has occurred in the attachment pad 320 or a touch input that has occurred at the recognition point 330, the electronic device 200 may grasp product information of the accessory 300 based on a location of the recognition point 330.

For example, by detecting a touch input that has occurred in the attachment pad 320 or a touch input that has occurred in the recognition point 330, the electronic device 200 may determine a location of the right side, the left side, the upper side, and the lower side of the accessory 300 on the electronic device 200 based on a location of the recognition point 330.

According to various example embodiments, at the left side of the accessory 300, when the recognition point 330 is located between two attachment pads 320, the recognition point 330 may be disposed adjacent to any one attachment pad 320 instead of an intermediate portion between two attachment pads 320 at the left side of the accessory 300. By detecting a touch input occurring at the recognition point 330 asymmetrically disposed between the attachment pads 320, the electronic device 200 may detect a location of the accessory 300 on the electronic device 200.

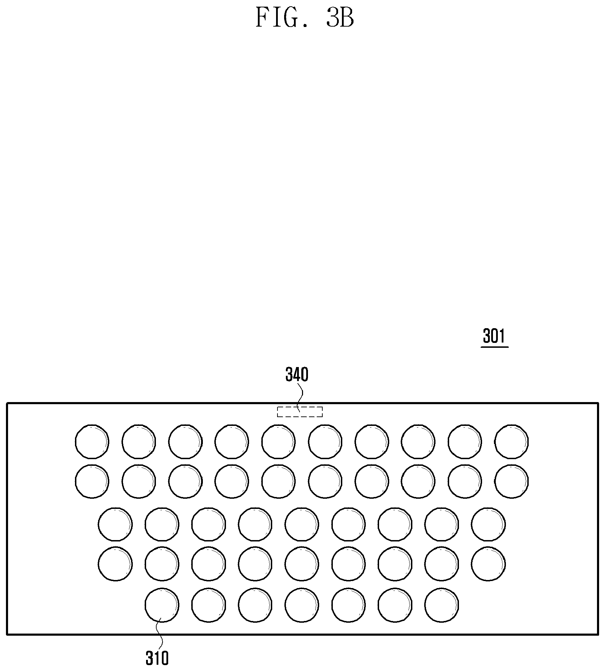

In FIG. 3B, the accessory 301 may include at least one physical key 310 or a communication module 340. The accessory 301 of FIG. 3B may include the same function and material as those of the accessory 300 of FIG. 3A.

According to an example embodiment, the accessory 301 may establish communication (e.g., pairing) to the electronic device 200 through the communication module 340. Further, the accessory 301 may communicatively connect to or pair with another electronic device (e.g., the electronic device 104, the server 106) as well as the electronic device 200 in which the accessory is mounted through the communication module 340.

The communication module 340 may include at least one of a cellular module 221, a WiFi module 223, a BT module 225, a GPS module 227, an NFC module 228, or a radio frequency (RF) module 229. The communication module 340 may include a memory function.

The communication module 340 may include an application list (or some other structure for the information) that can operate using the accessory 301, and when communication is connected to the electronic device 200 or another electronic device (e.g., the electronic device 104, the server 106), the communication module 340 may transmit an application list to the electronic device 200 or another electronic device (e.g., the electronic device 104, the server 106). The electronic device 200 or another electronic device (e.g., the electronic device 104, the server 106), having received the application list may execute an application automatically or by user manipulation according to the received application list. According to an example embodiment, the electronic device 200 or another electronic device (e.g., the electronic device 104, the server 106), having received the application list may install an application automatically or by user manipulation through data communication according to the received application list.

According to an example embodiment, the communication module 340 may include an application that can operate using the accessory 301, and when communication is connected to the electronic device 200 or another electronic device (e.g., the electronic device 104, the server 106), the communication module 340 may transmit an application to the electronic device 200 or another electronic device (e.g., the electronic device 104, the server 106). The electronic device 200 or another electronic device (e.g., the electronic device 104, the server 106), having received the application may install or execute the received application automatically or by user manipulation.

According to an example embodiment, the communication module 340 may store a vertical and lateral direction location of the accessory 301 on the electronic device 200 or product information (e.g., a model name, a keypad form implemented in the accessory) of the accessory 301. When communication is connected to the electronic device 200, the communication module 340 may transmit a vertical and lateral direction location of the accessory 301 on the electronic device 200 or product information of the accessory 301 to the electronic device 200. The electronic device 200 may determine a vertical and lateral direction location of the accessory 301 or product information of the accessory 301 using a request from the communication module 340 or received information.

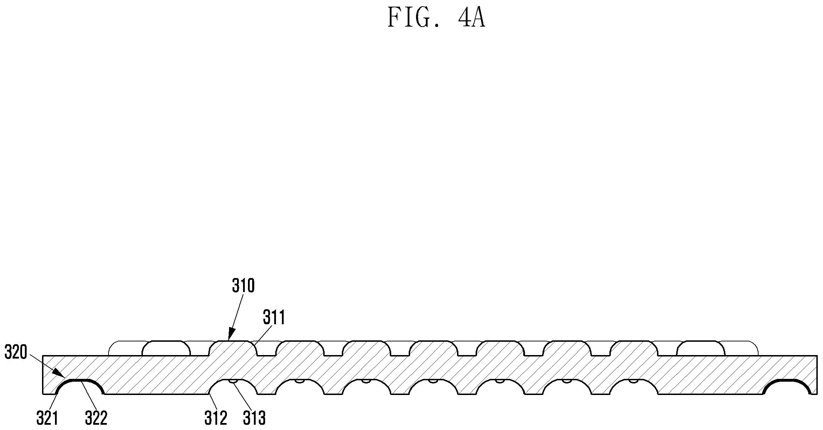

FIGS. 4A to 4C are cross-sectional views illustrating the accessory 300 according to various example embodiments of the present disclosure. FIGS. 4A to 4C are cross-sectional views illustrating the accessory 300 of FIG. 3 taken along line A-A'.

In FIG. 4A, the accessory 300 may include at least one physical key 310, at least one attachment pad 320, and at least one recognition point 330 (seen in FIGS. 3A-3B).

At least one physical key 310 of the accessory 300 may have a physical shape 311 at an upper surface so that a user may detect a location of the key 310 with tactile sense. For example, at least one physical key 310 of the accessory 300 may extend from a surface of the accessory 300 so that the user may detect the key 310 with tactile sense. According to an example embodiment, at an upper surface of the accessory 300, the key 310 may be defined by the physical shape 311.

At least one physical key 310 of the accessory 300 may have a concave surface or a convex surface so that the user may detect the key 310 with tactile sense. According to an example embodiment, the accessory 300 may have a convex surface as the physical shape 311 at an upper surface.

At least one physical key 310 of the accessory 300 may form at least one adsorption port (or an adsorption area 312) at a rear surface. When the user puts and presses the accessory 300 on the electronic device 200, air in an adsorption port 312 formed at a rear surface of at least one physical key 310 of the accessory 300 is discharged to the outside and thus at the inside of the adsorption port 312, an air pressure may be formed. In this case, by a difference between an air pressure formed at the inside of the adsorption port 312 and an atmospheric pressure of the outside, the accessory 300 may be securely attached to (or securely maintained in close contact with) the electronic device 200.

In a state where the accessory 300 is adsorbed to the electronic device 200, when the user presses the physical key 310, a conductor 313 included in the physical key 310 may contact on the electronic device 200, thus generating a touch input to the electronic device 200.

When the user presses the physical key 310, the conductor 313 may be coated in a partial area of the adsorption port 312 so that the conductor 313 included in the physical key 310 contacts on the electronic device 200.

According to an example embodiment, when the user presses the physical key 310 the conductor 313 included in the physical key 310 contacts the electronic device 200. Accordingly, because the adsorption port 312 absorbs to the electronic device 200, the conductor 313 may be disposed or a conductor coating formed at a point in which a distance between the adsorption port 312 and the electronic device 200 is greatest, reducing a chance of accidental contact.

At least one attachment pad 320 of the accessory 300 may form at least one adsorption port (or an adsorption area) 321 at a rear surface. When the user places and presses the accessory 300 against the electronic device 200, air in the adsorption port 321 formed at a rear surface of at least one physical key 310 of the accessory 300 is discharged and thus within the adsorption port 321, a pocket of non-standard air pressure may be formed. In this case, because of a difference between this air pressure inside of the adsorption port 321 and the standard environment atmospheric pressure, the accessory 300 may be securely attached to (or securely maintained in close contact with) the electronic device 200.

In one embodiment, even if the user does not press the attachment pad 320, a conductor 322 may be disposed within or coated on an entire area of the adsorption port 321 so that the conductor 322 included in the attachment pad 320 remains in contact with the electronic device 200.

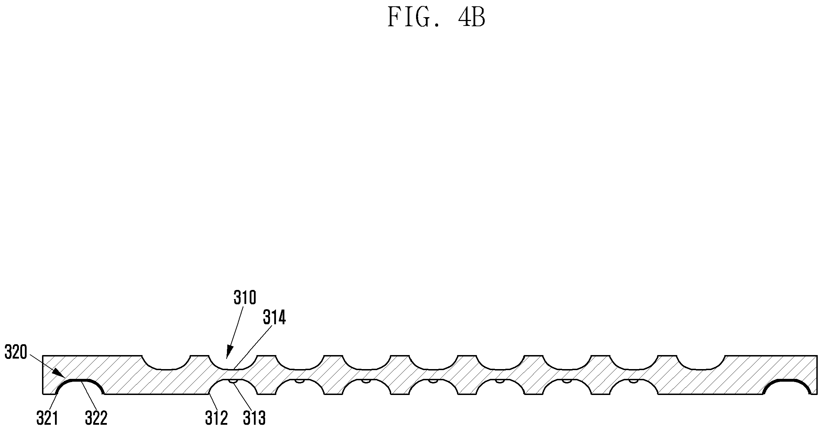

In FIG. 4B, the accessory 300 may include at least one physical key 310, at least one attachment pad 320, and at least one recognition point 330.

At least one physical key 310 of the accessory 300 may have a physical shape 314 at an upper surface so that the user may detect the key 310 with tactile sense. For example, at least one physical key 310 of the accessory 300 may recess from a surface of the accessory 300 so that the user may detect the key 310 with tactile sense. For example, at least one physical key 310 of the accessory 300 may include a concave surface physical shape 314 so that the user may detect the key 310 with tactile sense.

The accessory 300 may include at least one physical key 310, at least one attachment pad 320, and at least one recognition point 330.

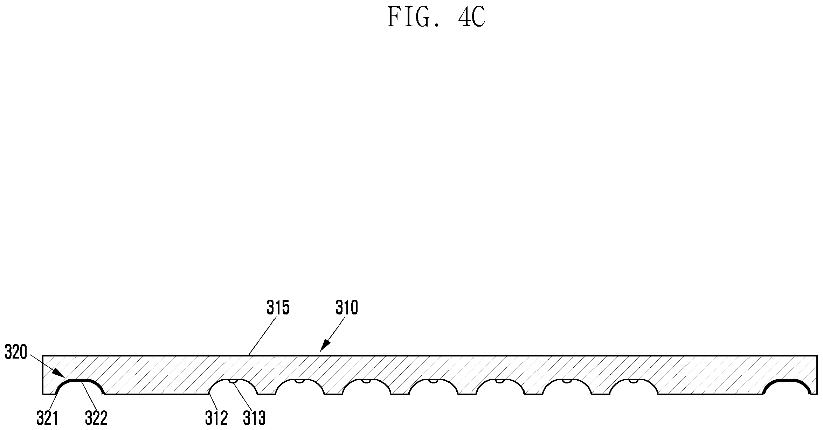

In FIG. 4C, at least one physical key 310 of the accessory 300 may have a physical shape at an upper surface so that the user may detect a location of the key 310 with tactile sense. For example, at least one physical key 310 of the accessory 300 may include a print 315 of the key 310 on the surface of the accessory 300 so that the user may detect the key 310 with tactile sense.

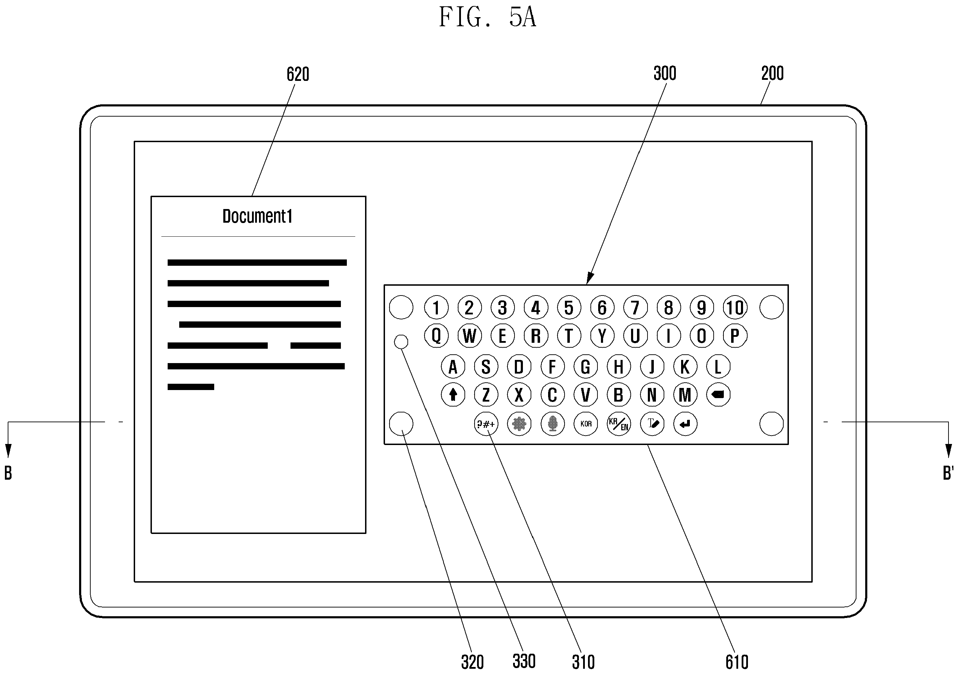

FIGS. 5A to 5B are diagrams illustrating an example electronic device 200 in which accessories 300 and/or 301 are mounted according to various example embodiments of the present disclosure.

In FIG. 5A, according to an example embodiment, in the electronic device 200, the accessory 300 may be mounted on a touch screen (e.g., the touch panel 252 or the input and output interface 140).

When the accessory 300 is mounted in the electronic device 200, a "touch input" may be transferred to the electronic device 200 through the at least one attachment pad 320 or recognition point 330.

The electronic device 200 may detect the accessory 300 through the touch input received through at least one attachment pad 320 or recognition point 330. The electronic device 200 may detect an area in which the accessory 300 is disposed on the electronic device 200 through the touch input received through at least one attachment pad 320 or recognition point 330.

When the accessory 300 is detected, the electronic device 200 may execute, generate and display a virtual keypad 610 in the display area of the detected accessory 300. In an example embodiment, the accessory 300 has a QWERTY keyboard shape, but it is not limited thereto and the accessory 300 may have a keyboard shape including a numeral or a game pad shape including a direction key.

When the accessory 300 is detected, the electronic device 200 may execute a virtual keypad 610, displayed in an area corresponding to an area of the detected accessory 300. A virtual key included in the virtual keypad 610 may also correspond in display location to the physical key 310 of the accessory 300.

The electronic device 200 may change a user interface according to a location of the virtual keypad 610. According to an example embodiment, the electronic device 200 may rearrange an application execution area 620 according to a location of the virtual keypad 610.

As the physical key 310 of the accessory 300 is pressed by the user, when a touch input is detected on a touch screen of the electronic device 200, a key of the virtual keypad 610 corresponding to the pressed physical key 310 may be selected or applied.

According to an example embodiment, as the physical key 310 of the accessory 300 is pressed by the user, when a touch input is detected on a touch screen of the electronic device 200, the electronic device 200 may display a character or a numeral according to a key of the virtual keypad 610 corresponding to the pressed physical key 310, change an input location according to a direction key, or control operation of an executing application with the direction key, i.e., may provide the same experience as a manipulation of a general virtual touch keypad to the user.

According to an example embodiment, as the physical key 310 of the accessory 300 is pressed by the user, when a touch input is detected on a touch screen of the electronic device 200, the electronic device 200 may input a character or a numeral to an executing application execution area 620 according to a key of the virtual keypad 610 corresponding to the pressed physical key 310 and may change an input location according to a direction key.

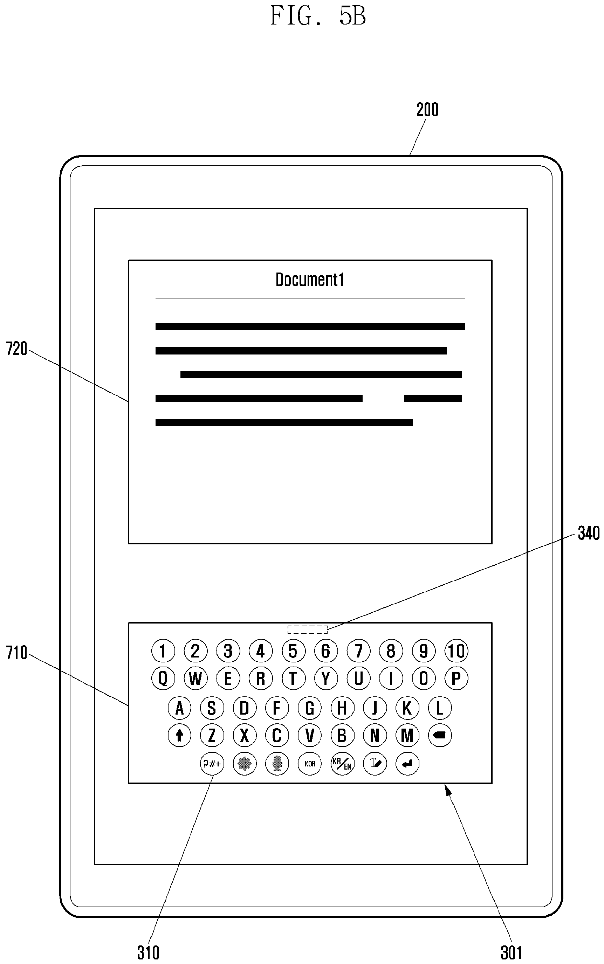

In FIG. 5B, when the accessory 301 is mounted in the electronic device 200, the accessory 301 may connect to the electronic device 200 through the communication module 340.

The electronic device 200 may detect the accessory 301 through the communication module 340.

When communication is connected to the electronic device 200, the communication module 340 may output a vertical and lateral direction location of the accessory 301 on the electronic device 200 or product information of the accessory 301 to the electronic device 200. The electronic device 200 may determine a vertical and lateral direction of the accessory 301 or product information of the accessory 301 using information received through the communication module 340. According to an example embodiment, the communication module 340 may include a memory function. The communication module 340 may store a vertical and lateral direction location of the accessory 301 or product information (e.g., a model name, a keypad form implemented in accessory) of the accessory 301.

The communication module 340 may include an application list (or information) that can operate using the accessory 301, and when communication is connected to the electronic device 200, the communication module 340 may output an application list to the electronic device 200. The electronic device 200, having received the application list may execute an application automatically or by user manipulation according to the received application list. According to an example embodiment, the electronic device 200, having received the application list may execute an application automatically or by user manipulation through data communication according to the received application list.

According to an example embodiment, the communication module 340 may include an application that can operate using the accessory 301, and when communication is connected to the electronic device 200, the communication module 340 may output an application to the electronic device 200. The electronic device 200, having received the application may execute the received application automatically or by user manipulation.

According to an example embodiment, the accessories 300 and/or 301 may include pattern information that can execute a virtual keypad, and by detecting pattern information of the accessories 300 and/or 301 through the touch panel 252, the electronic device 200 may execute the virtual keypad. For example, when the electronic device 200 and the accessories 300 and/or 301 contact or hover on the display 260, the electronic device 200 may detect pattern information of the accessories 300 and/or 301 using a capacitance change of the touch panel 252 and thus execute a function related to the virtual keypad or the accessories 300 and/or 301.

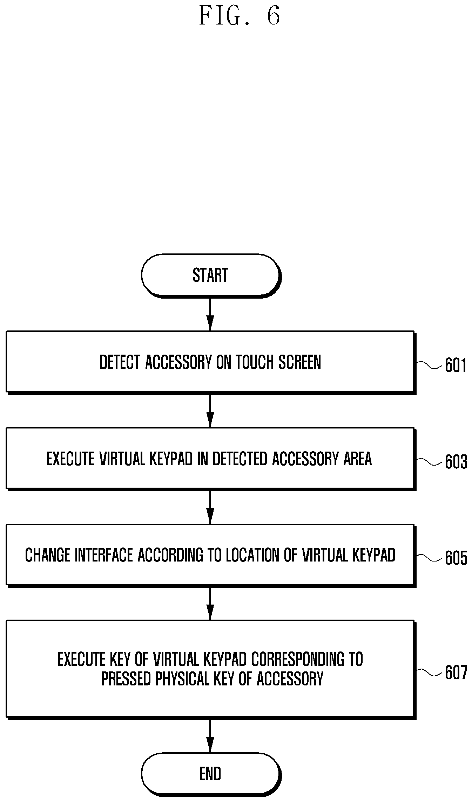

FIG. 6 is a flowchart illustrating a method of providing an interface of an electronic device 200 according to various example embodiments of the present disclosure.

When the accessories 300 and/or 301 are mounted on a touch screen (e.g., the touch panel 252 or the input and output interface 140), the electronic device 200 may detect an area in which the accessories 300 and/or 301 are disposed on the electronic device 200 through data received through the communication module 340 or a touch input transferred through at least one attachment pad 320 or recognition point 330 (601).

When the accessories 300 and/or 301 are detected, the electronic device 200 may execute a virtual keypad in an area of the detected accessories 300 and/or 301 (603). In an example embodiment, the accessories 300 and/or 301 have a QWERTY keyboard shape, but it is not limited thereto and the accessories 300 and/or 301 may have a keyboard shape including a numeral and a game pad shape including a direction key. The electronic device 200 may detect an area of the accessories 300 and/or 301 of a QWERTY keyboard shape, a keyboard shape including a numeral, or a game pad shape including a direction key and display a virtual keypad to correspond to an area in which the accessories 300 and/or 301 are disposed.

According to an example embodiment, when the accessories 300 and/or 301 are detected, the electronic device 200 may execute a virtual keypad corresponding to an area of the detected accessories 300 and/or 301 (603). A virtual key included in the virtual keypad corresponding to an area of the detected accessories 300 and/or 301 may correspond to the physical key 310 of the accessories 300 and/or 301.

The electronic device 200 may change a user interface according to a location of an output virtual keypad (605). According to an example embodiment, the electronic device 200 may rearrange an application execution area according to a location of a virtual keypad.

As the physical key 310 of the accessories 300 and/or 301 is pressed by the user, when a touch input is detected on a touch screen of the electronic device 200, the electronic device 200 may execute a key of a virtual keypad corresponding to the pressed physical key 310 (607).

According to an example embodiment, at operation 607, as the physical key 310 of the accessories 300 and/or 301 is pressed by the user, when a touch input is detected on a touch screen of the electronic device 200, the electronic device 200 may display a character or a numeral according to a key of a virtual keypad corresponding to the pressed physical key 310 and may change an input location according to a direction key or may control operation of an executing application with a direction key.

According to an example embodiment, at operation 607, as the physical key 310 of the accessories 300 and/or 301 is pressed by the user, when a touch input is detected on a touch screen of the electronic device 200, the electronic device 200 may input a character or a numeral to an executing application according to a key of a virtual keypad corresponding to the pressed physical key 310 and may change an input location according to a direction key.

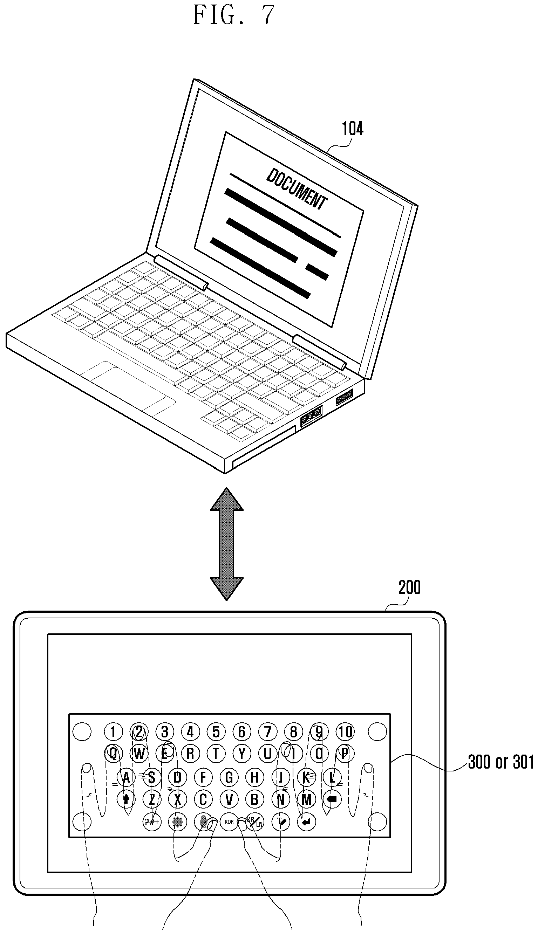

FIG. 7 is a diagram illustrating a communication method between an electronic device 200 in which accessories 300 and/or 301 are mounted, and another electronic device 104, according to various example embodiments

When the accessories 300 and/or 301 are mounted on a touch screen (e.g., the touch panel 252 or the input and output interface 140), the electronic device 200 may detect an area in which the accessories 300 and/or 301 are disposed on the electronic device 200 through data received through the communication module 340 or a touch input transferred through at least one attachment pad 320 or recognition point 330 (as seen in FIGS. 3A-3B).

When the accessories 300 and/or 301 are detected, the electronic device 200 may execute a virtual keypad in an area of the detected accessories 300 and/or 301. In an example embodiment, the accessories 300 and/or 301 have a QWERTY keyboard shape, but it is not limited thereto and the accessories 300 and/or 301 may have a keyboard shape formed with a numeral and a game pad shape including a direction key. The electronic device 200 may detect an area of the accessories 300 and/or 301 of a QWERTY keyboard shape, a keyboard shape including a numeral, or a game pad shape including a direction key and display a virtual keypad to correspond to an area in which the accessories 300 and/or 301 are disposed.

According to an example embodiment, when the accessories 300 and/or 301 are detected, the electronic device 200 may execute a virtual keypad corresponding to an area of the detected accessories 300 and/or 301. A virtual key included in the virtual keypad corresponding to an area of the detected accessories 300 and/or 301 may correspond to the physical key 310 of the accessories 300 and/or 301.

The electronic device 200 may change a user interface according to a location of an output virtual keypad. According to an example embodiment, the electronic device 200 may disable other areas of at least a portion other than an accessory area executing the virtual keypad not to receive a touch input.

As the physical key 310 of the accessories 300 and/or 301 is pressed by the user, when a touch input is detected on a touch screen of the electronic device 200, the electronic device 200 may transmit information about a key of a virtual keypad corresponding to the pressed physical key 310 to the electronic device 104. Here, another electronic device 104 may include a communication function to facilitate the transmission and receival of this or other information.

Another electronic device 104, having received information about a key of the virtual keypad may execute an operation according to the received key information.

According to an example embodiment, the other electronic device 104 may display a character or a numeral according to received key information and may change an input location according to the direction key or may control operation of an executing application with the direction key.

According to an example embodiment, the other electronic device 104 may input a character or a numeral to an executing application according to received key information and may change an input location according to a direction key.

FIG. 8 is a flowchart illustrating a communication method between an electronic device 200 in which accessories 300 and/or 301 are mounted and another electronic device 104 according to various example embodiments.

The electronic device 200 may connect to another electronic device 104 or may pair with another electronic device 104.

When the accessories 300 and/or 301 are mounted on a touch screen (e.g., the touch panel 252 or the input and output interface 140), the electronic device 200 may detect an area in which the accessories 300 and/or 301 are disposed on the electronic device 200 through data received through the communication module 340 or a touch input transferred through at least one attachment pad 320 or recognition point 330 (801).

When the accessories 300 and/or 301 are detected, the electronic device 200 may execute a virtual keypad in an area of the detected accessories 300 and/or 301 (803). In an example embodiment, the accessories 300 and/or 301 have a QWERTY keyboard shape, but the disclosure is not limited thereto and the accessories 300 and/or 301 may have other keyboard shapes including numerals and a game pad shape including a direction key. The electronic device 200 may detect an area of the accessories 300 and/or 301 of a QWERTY keyboard shape, a keyboard shape including a numeral, or a game pad shape including a direction key and display a virtual keypad to correspond to an area in which the accessories 300 and/or 301 are disposed.

According to an example embodiment, when the accessories 300 and/or 301 are detected, the electronic device 200 may execute a virtual keypad corresponding to an area of the detected accessories 300 and/or 301 (803). A virtual key included in the virtual keypad corresponding to an area of the detected accessories 300 and/or 301 may correspond to the physical key 310 of the accessories 300 and/or 301.

The electronic device 200 may change a user interface according to a location of an output virtual keypad (805). According to an example embodiment, at operation 805, the electronic device 200 may disable other areas other than an accessory area while executing the virtual keypad not to receive a touch input.

As the physical key 310 of the accessories 300 and/or 301 is pressed by the user, when a touch input is detected on a touch screen of the electronic device 200, the electronic device 200 may transmit information about a key of a virtual keypad corresponding to the pressed physical key 310 to another electronic device 104 (807).

Another electronic device 104 may receive information about a key of the virtual keypad (809). The other electronic device 104 may execute operation according to the received key information (811).

According to an example embodiment, at operation 811, the other electronic device 104 may display a character or a numeral according to the received key information and may change an input location according to a direction key or may control operation of an executing application with a direction key.

According to an example embodiment, at operation 811, the other electronic device 104 may input a character or a numeral to an executing application according to the received key information and may change an input location according to a direction key.

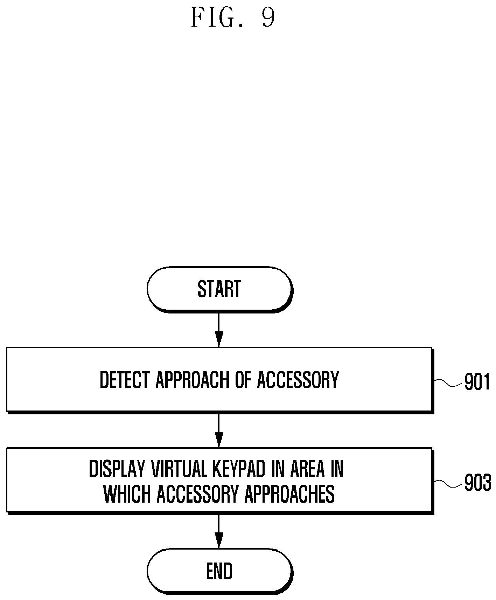

FIG. 9 is a flowchart illustrating a method of providing an interface of an electronic device 200 according to various example embodiments of the present disclosure.

When the accessories 300 and/or 301 approach the electronic device 200, the electronic device 200 may detect the 300 and/or 301 approach (901). The electronic device 200 may 300 and/or 301the approach through the proximity sensor 240G or the touch panel 252. Even if the accessory 300 does not directly contact the touch screen of the electronic device 200, when the accessories 300 and/or 301 approach within a predetermined distance from the electronic device 200 (e.g., when the accessories 300 and/or 301 are hovering over the touch screen of the electronic device 200), the electronic device 200 may detect whether the accessories 300 and/or 301 approach.

When the electronic device 200 detects that the accessories 300 and/or 301 approach the electronic device 200, the electronic device 200 may display the virtual keypad 610 in an area in which the accessory 300 approaches (903).

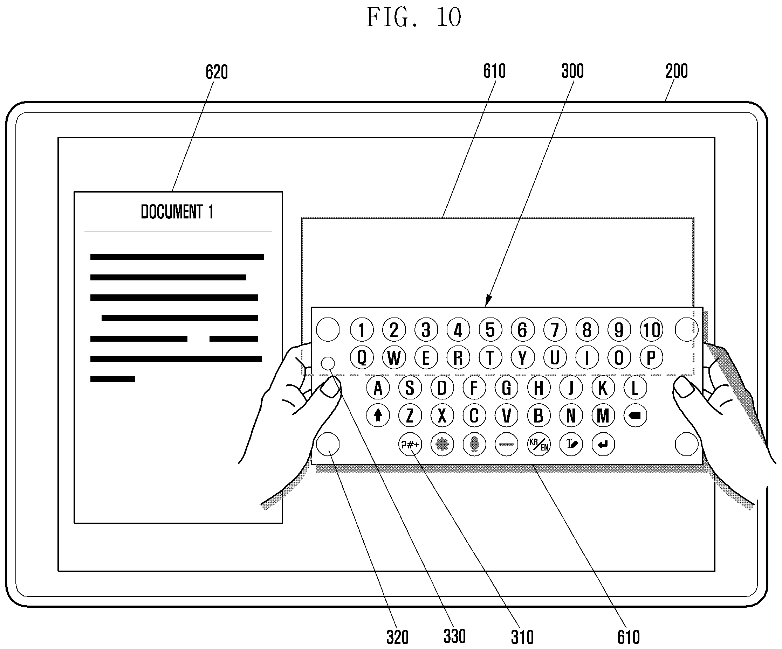

According to an example embodiment, before the accessories 300 and/or 301 directly contact on a touch screen, the electronic device 200 may display a virtual keypad (e.g., 610 of FIG. 10), assisting user in selecting a location in which the accessories 300 and/or 301 are to be mounted.

FIG. 10 is a diagram illustrating a method of providing an interface of an electronic device 200 according to various example embodiments of the present disclosure.

When the accessory 300 approaches the electronic device 200, the electronic device 200 may detect whether the accessory 300 approach. When the electronic device 200 detects that the accessory 300 approaches the electronic device 200, the electronic device 200 may display the virtual keypad 610 in an area 1000 in which the accessory 300 approaches.

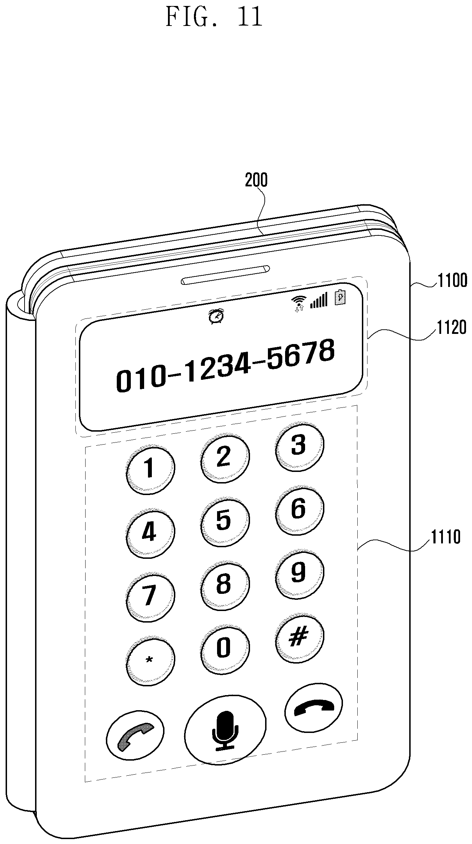

FIG. 11 is a diagram illustrating an accessory 1100 according to various example embodiments of the present disclosure.

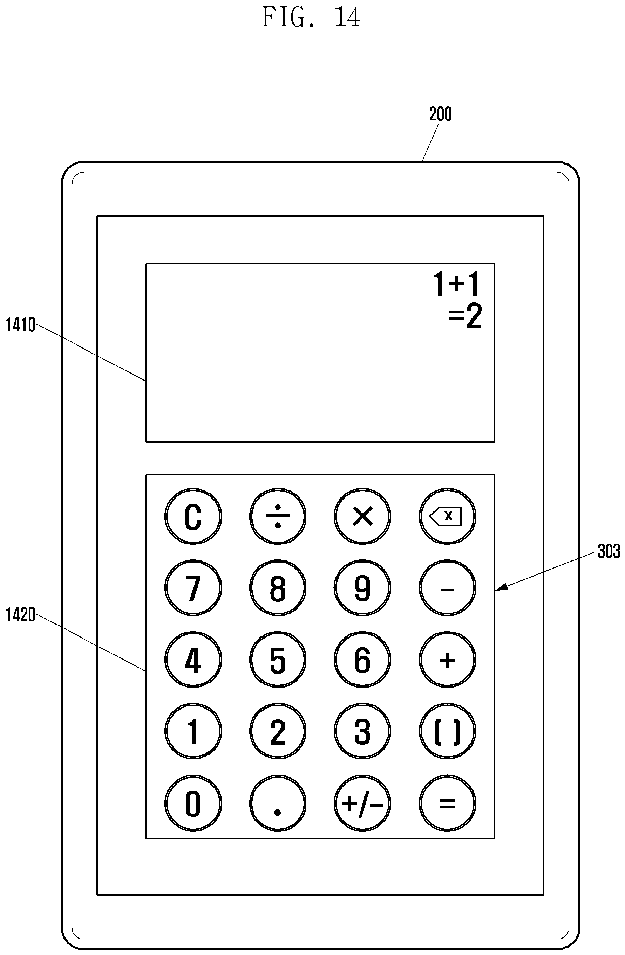

The accessory 1100 according to the present example embodiment may include a physical key 1110 or a window (e.g., 1420 of FIG. 14). The accessory 1100 may have a cover form that covers a front surface or one surface of the electronic device 200. FIG. 11 illustrates a form in which the accessory 1100 covers a front surface or one surface of the electronic device 200.

The physical key 1110 according to the present example embodiment may be generated by at least one of a method of physically printing at least one of a text and an image, a method of physically sealing at least one of a text and an image to the physical key 1110, a method of engraving at least one of a text and an image physically concavely further than a predetermined one surface in which a physical key (e.g., 1410 of FIG. 14) includes, and a method of engraving at least one of a text and an image physically convexly further than a predetermined one surface in which an accessory includes. For example, the physical key 1110 may display a number (e.g., 0, 1, 2, 3, 4, 5, 6, 7, 8, and 9) Ul, hash Ul, and asterisk UI. The physical key 1110 may be detached from the accessory (e.g., 1400 of FIG. 14), and when the physical key 1110 is separated from the accessory 1100, the physical key 1110 may operate like the accessories 300 and/or 301 of FIG. 3 or 5. According to an example embodiment of the present disclosure, even in a state in which the physical key 1110 is mounted in the accessory 1100, the physical key 1110 may receive a user input to the electronic device 200.

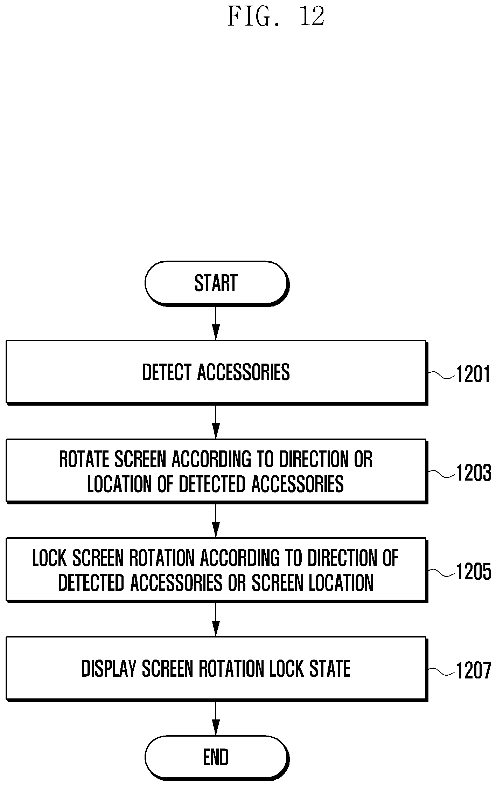

FIG. 12 is a flowchart illustrating a method of providing an interface of an electronic device 200 according to an example embodiment of the present disclosure.

When the accessories 300 and/or 301 are mounted on a touch screen (e.g., the touch panel 252 or the input and output interface 140), the electronic device 200 may detect an area in which the accessories 300 and/or 301 are disposed on the electronic device 200 through data received through the communication module 340 or a touch input transferred through at least one attachment pad 320 or recognition point 330 (1201).

The electronic device 200 may rotate a screen according to a direction or a location of the detected accessories 300 and/or 301 (1203). For example, the electronic device 200 may rotate a screen displayed in the display 260 to correspond to a location of a character, numeral, or direction key of the accessories 300 and/or 301 according to a direction in which a character, numeral, or direction key included in the accessories 300 and/or 301 is rightly read.

The electronic device 200 may lock a rotation of a screen displayed in the display 260 according to a direction of the detected accessories 300 and/or 301 or a rotated screen location (1205). For example, the electronic device 200 may fix a screen displayed in the display 260 according to the rotated screen location not to change according to a location movement of the electronic device 200.

The electronic device 200 may display a screen rotation lock state in the display 260 (1207). For example, the electronic device 200 may display a screen rotation lock state in a state display bar with a Graphical User Interface (GUI).

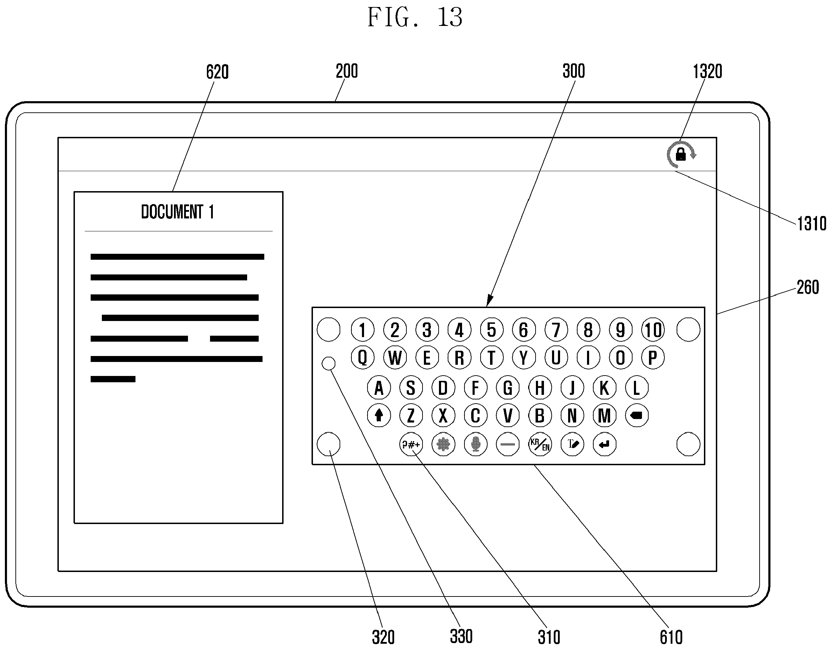

FIG. 13 is a diagram illustrating a method of providing an interface of an electronic device 200 according to an example embodiment of the present disclosure.

The electronic device 200 may display a screen rotation lock state in the display 260. For example, the electronic device 200 may display a screen rotation lock state with a GUI 1320 on screen lock in a state display bar 1310 displayed at an upper end portion of the display 260.

FIG. 14 is a diagram illustrating an electronic device 200 in which an accessory 303 is mounted according to various example embodiments of the present disclosure.

According to an example embodiment, in the electronic device 200, the accessory 303 may be mounted on the touch screen (e.g., the touch panel 252 of FIG. 2, or the input and output interface 140 of FIG. 1). The accessory 303 may have a keyboard shape including a numeral.

When the accessory 303 is detected, the electronic device 200 may execute a virtual keypad 1420 corresponding to an area of the detected accessories 300 and/or 301303. A virtual key included in the virtual keypad 1420 corresponding to an area of the detected accessory 303 may correspond to a physical key of the accessory 303.

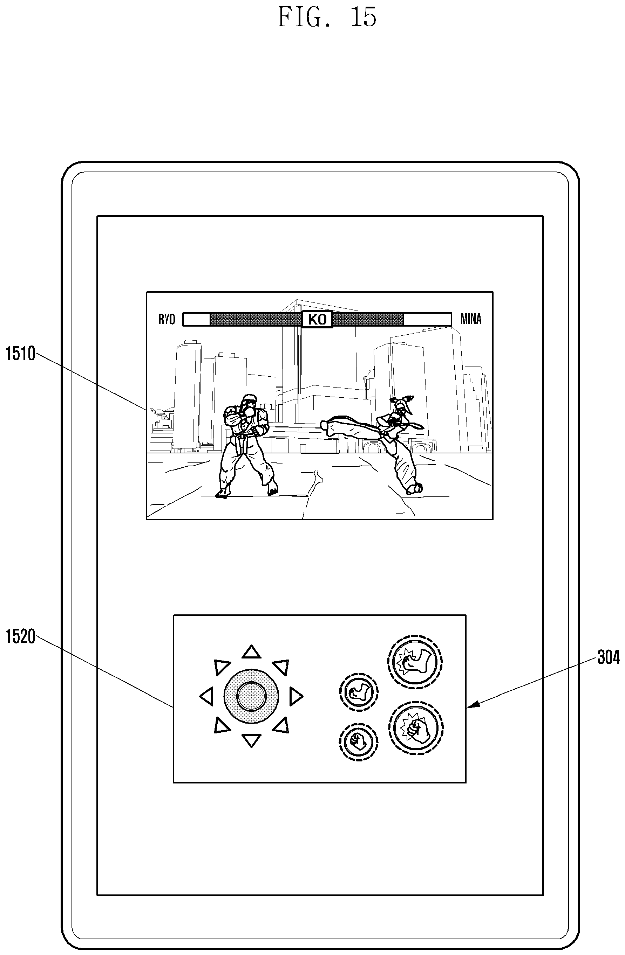

FIG. 15 is a diagram illustrating an electronic device 200 in which an accessory 304 is mounted according to various example embodiments of the present disclosure.

According to an example embodiment, in the electronic device 200, the accessory 304 may be mounted on the touch screen (e.g., the touch panel 252 of FIG. 2, or the input and output interface 140 of FIG. 1). The accessory 304 may have a game pad shape including a direction key.

When the accessory 304 is detected, the electronic device 200 may execute a virtual keypad 1520 corresponding to an area of the detected accessory 304. A virtual key included in the virtual keypad 1520 corresponding to an area of the detected accessory 304 may correspond to the physical key of the accessory 300. A game application 1510 displayed on the touch screen may be controlled by inputs from the virtual keypad 1520, received through the accessory 304.

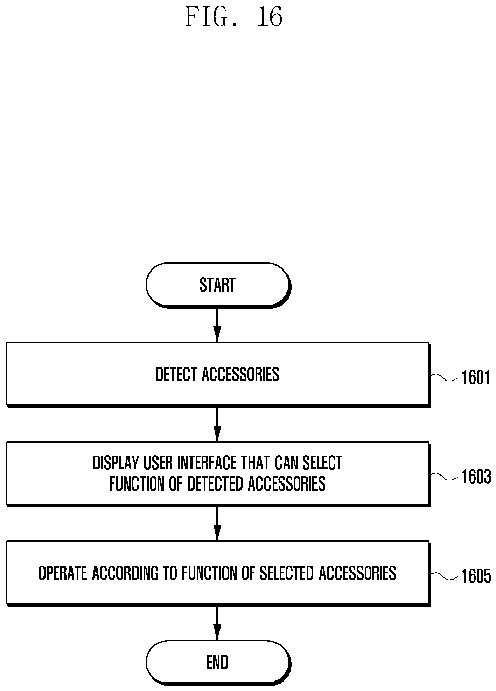

FIG. 16 is a flowchart illustrating a method of providing an interface of an electronic device 200 according to an example embodiment of the present disclosure.

When the accessories 300 and/or 301 are mounted on a touch screen (e.g., the touch panel 252 or the input and output interface 140), the electronic device 200 may detect an area in which the accessories 300 and/or 301 are disposed on the electronic device 200 through data received through the communication module 340 or a touch input transferred through at least one attachment pad 320 or recognition point 330 (1601).

The electronic device 200 may display a user interface that can select a function of the detected accessories 300 and/or 301 in the display 260 (1603). The user interface that can select a function of the detected accessories 300 and/or 301 may be a user interface of a popup window form. When displaying the user interface that can select a function of the detected accessories 300 and/or 301 in the display 260, the electronic device 200 may receive a user input on function selection.

The electronic device 200 may enable to separately select an entire use function, a function related to a numeral, a function on a character input, and a function on a direction key among functions of the detected accessories 300 and/or 301. For example, when the detected accessories 300 and/or 301 entirely include a physical key on a numeral, a character, and a direction, the electronic device 200 may enable to entirely use a numeral, a character, and a direction or to selectively use any function of a numeral, a character, and a direction. In order to selectively use any function of a numeral, a character, and a direction, the electronic device 200 may disable other areas of at least a portion other than the selected physical key area not to receive a touch input.

The electronic device 200 may receive a user input through the accessories 300 and/or 301 according to a function of the selected accessories 300 and/or 301 (1605).

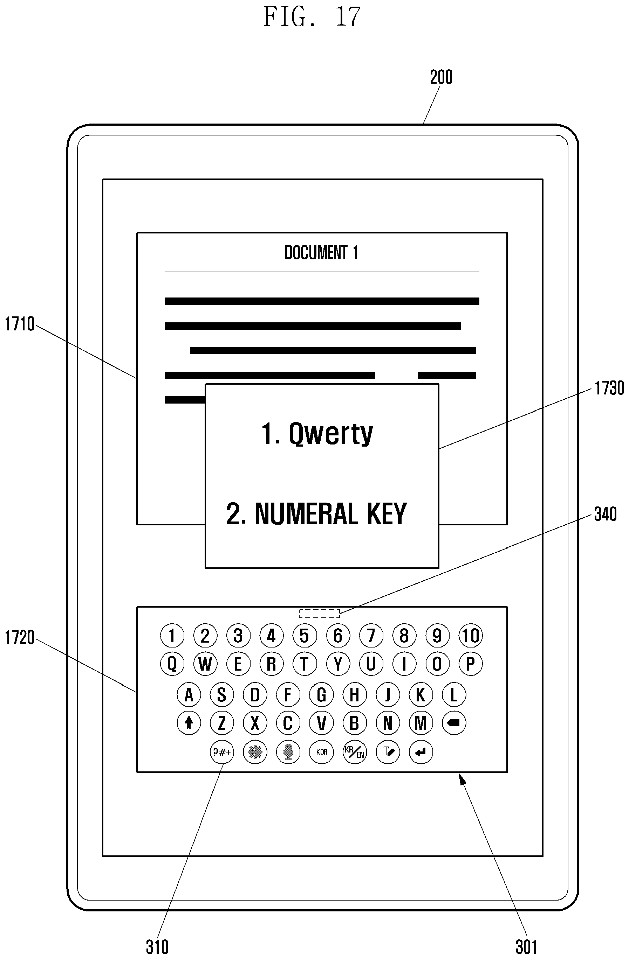

FIG. 17 is a diagram illustrating a method of providing an interface of an electronic device 200 according to an example embodiment of the present disclosure.

The electronic device 200 may display a user interface 1730 that can select a function of the detected accessories 300 and/or 301 in the display 260. According to an example embodiment, the user interface 1730 may include an application, a setting menu, and application information 1710. The user interface that can select a function of the detected accessories 300 and/or 301 may be a user interface of a popup window form. When a user interface that can select a function of the detected accessories 300 and/or 301 is displayed in the display 260 (e.g., the keyboard 1720), the electronic device 200 may receive a user input on function selection.

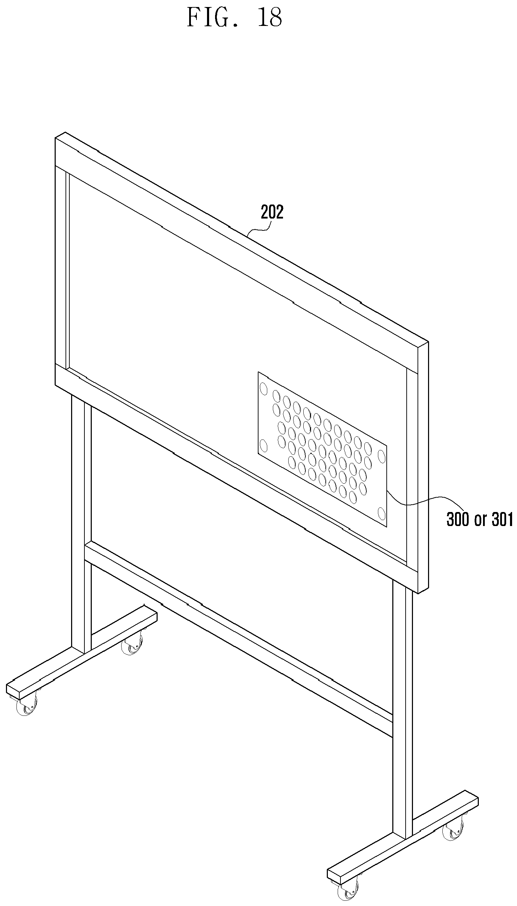

FIG. 18 is a diagram illustrating an electronic device 202 in which an accessory 304 is mounted according to various example embodiments of the present disclosure.

The electronic device 202 may be an electronic blackboard. The electronic blackboard includes a display device having a projector of a rear surface or front surface projection method or a display device having a touch screen and may include an input means that can detect a touch input.

When the accessories 300 and/or 301 are mounted on the display device, the electronic device 202 may detect an area in which the accessories 300 and/or 301 are disposed on the electronic device 200 through data received through the communication module 340, or a touch input transferred through at least one attachment pad 320 or recognition point 330.

When the accessories 300 and/or 301 are detected, the electronic device 202 may execute a virtual keypad in an area of the detected accessories 300 and/or 301. According to an example embodiment, when the accessories 300 and/or 301 are detected, the electronic device 202 may execute a virtual keypad corresponding to an area of the detected accessories 300 and/or 301. A virtual key included in a virtual keypad corresponding to an area of the detected accessories 300 and/or 301 may correspond to a physical key of the accessories 300 and/or 301. The electronic device 202 may change a user interface according to a location of an output virtual keypad. According to an example embodiment, the electronic device 202 may rearrange an application execution area according to a location of a virtual keypad.

As a physical key of the accessories 300 and/or 301 is pressed by the user, when a touch input is detected on an input means of the electronic device 202, the electronic device 202 may execute a key of a virtual keypad corresponding to the pressed physical key. As a physical key of the accessories 300 and/or 301 is pressed by the user, when a touch input is detected on an input means of the electronic device 202, the electronic device 202 may input a character or a numeral to an executing application according to a key of a virtual keypad corresponding to the pressed physical key and may change an input location according to a direction key.

A term "module" used in various example embodiments of the present disclosure may indicate a unit including a combination of at least one of, for example hardware, software, or firmware. The "module" may be interchangeably used with a term such as a unit, logic, a logical block, a component, or a circuit. The "module" may be a minimum unit of an integrally formed component or a portion thereof. The "module" may be a minimum unit that performs at least one function or a portion thereof. The "module" may be mechanically or electronically implemented. For example, a "module" according to various example embodiments of the present disclosure may include at least one of an Application-Specific Integrated Circuit (ASIC) chip, Field-Programmable Gate Arrays (FPGAs), or a programmable-logic device that performs any operation known or to be developed.

According to various example embodiments, at least a portion of a method (e.g., operations) or a device (e.g., modules or functions thereof) according to various example embodiments of the present disclosure may be implemented with an instruction stored at computer-readable storage media in a form of, for example a programming module. When the instruction is executed by at least one processor (e.g., the processor 120), the at least one processor may perform a function corresponding to the instruction. The computer readable storage media may be, for example the memory 130. At least a portion of the programming module may be implemented (e.g., executed) by, for example the processor 120. At least a portion of the programming module may include, for example a module, a program, a routine, sets of instructions, or a process for performing at least one function.

The computer-readable storage media may include magnetic media such as a hard disk, a floppy disk, and a magnetic tape, optical media such as a Compact Disc Read Only memory (CD-ROM) and a Digital Versatile Disc (DVD), magneto-optical media such as a floptical disk, and a hardware device, specially formed to store and perform a program instruction (e.g., a programming module), such as a Read Only memory (ROM), a Random Access memory (RAM), and a flash memory. Further, a program instruction may include a high-level language code that may be executed by a computer using an interpreter as well as a machine language code generated by a compiler. In order to perform operation of various example embodiments of the present disclosure, the above-described hardware device may be formed to operate as at least one software module, and vice versa.

A module or a programming module according to various example embodiments of the present disclosure may include at least one of the foregoing elements, may omit some elements, or may further include additional other elements. Operations performed by a module, a programming module, or another element according to various example embodiments of the present disclosure may be executed with a sequential, parallel, repeated, or heuristic method. Further, some operations may be executed in different orders, may be omitted, or may add other operations.

According to various example embodiments, in a storage medium that stores instructions, when the instructions are executed by at least one processor, the instructions are set the at least one processor to perform at least one operation, and the instructions may include operation of detecting, when an accessory including at least one physical key is mounted on a touch screen, a location of the accessory area on the touch screen; and operation of executing a virtual keypad in the detected accessory area.

As described above, according to various example embodiments of the present disclosure, by providing an accessory mounted in an electronic device to support a key input to the electronic device and an interface to an electronic device in which the accessory is mounted, a user can input a key to the electronic device without depending on visual sense and can control the electronic device through various input methods.

Although example embodiments of the present disclosure have been described in detail hereinabove, it should be clearly understood that many variations and modifications of the basic inventive concepts herein described, which may appear to those skilled in the art, will still fall within the example embodiments of the present disclosure as defined in the appended claims.

### PREFERRED FEATURES:

1. An accessory device, comprising:
   a main body including a top surface and a bottom surface;
   at least one fastener formed in the bottom surface and configured to detachably secure the main body to an electronic device;
   a plurality of flexible structures formed in the top surface, each of the plurality deformable in response to external pressure to cause a respective portion of the bottom surface to contact the electronic device, and return to an original shape when the external pressure is removed; and
   at least one of a conductor pattern or Integrated Circuit (IC) disposed within one or more of each of the plurality of flexible structures and the at least one fastener.
2. The accessory device of 1, wherein the fastener comprises an air adsorption port.
3. The accessory device of 1, further comprising conductive materials disposed within respective grooves of each of the plurality of flexible structures formed in the top surface, the conductive materials each configured to contact the electronic device when each of the plurality of flexible structures is deformed by the external pressure.
4. The accessory device of 1, wherein the plurality of flexible structures are disposed in a pattern of keyboard keys.
5. The accessory device of 1, wherein:
   a pattern of the plurality of flexible structures comprises a pattern of keyboard keys;
   the main body comprises a substantially transparent material; and
   visible markings including at least one of characters, numerals, and symbols are disposed on each of the plurality of flexible structures formed in the top surface.
6. A method in an electronic device, comprising:
   when an accessory comprising at least one physical key is mounted on a touch screen of the electronic device, detecting by a processor of the electronic device a location of the accessory on the touch screen; and
   displaying on a display of the electronic device a virtual keypad in the detected location of the accessory.
7. The method of 6, further comprising altering a configuration of a user interface displayed on the touch screen according to the displayed virtual keypad in the detected location of the accessory.
8. The method of 6, further comprising disabling touch inputs to the touch screen for areas of the touch screen outside the detected location of the accessory.
9. The method of 7, further comprising:
   detecting a touch input to a key of the virtual keypad generated by deformation of the at least one physical key; and
   in response to the touch input, executing a function corresponding to the key of the virtual keypad.
10. The method of 8, further comprising:
   detecting a touch input to a key of the virtual keypad generated by deformation of the at least one physical key; and
   in response to the touch input, transmitting information related to the touch input to the key of the virtual keypad to an external electronic device.
11. The method of 6, further comprising:
   detecting an approach of the accessory to the touch screen; and
   in response to the detected approach, displaying the virtual keypad according to the detected approach.
12. The method of 6, further comprising:
   when the accessory is mounted on the touch screen, changing a configuration of a displayed screen on the touch screen according to the detected location of the accessory and locking a screen rotation function for the touch screen.
13. The method of 6, further comprising:
   when the accessory is mounted on the touch screen, display on the touch screen a user interface selectable to execute a function of the accessory.
14. An electronic device, comprising:
   a communication module;
   a touch screen; and
   a processor, configured to:
      detect contact of an accessory including at least one structure corresponding to an input key on the touch screen,
      detect a location of the accessory on the touch screen, and
      display a user interface on the touch screen according to the detected location of the accessory, the displayed user interface including a virtual key displayed on the touch screen corresponding to the input key of the accessory.
15. The electronic device of 14, wherein the processor is further configured to control the touch screen to change the displayed user interface according to the detected location of the accessory.
16. The electronic device of 14, wherein the processor is further configured to disable touch inputs to the touch screen for areas of the touch screen outside the detected location of the accessory.
17. The electronic device of 16, wherein the processor is further configured to:
   detect a touch input to the virtual key of the user interface generated by activation of the input key of the accessory; and
   in response to the touch input, execute a function corresponding to the virtual key of the user interface.
18. The electronic device of 16, wherein the processor is further configured to:
   detect a touch input to the virtual key of the user interface generated by activation of the input key of the accessory; and
   in response to the touch input, transmit information related to the touch input to the virtual key to an external electronic device.
19. The electronic device of 14, wherein the processor is further configured to:
   detect an approach of the accessory to the touch screen; and
   in response to the detected approach, control the touch screen to display the user interface according to the detected approach.
20. A system comprising the electronic device of 18 and the external electronic device, wherein the external electronic device is configured to receive the transmitted information and execute an operation according to the received information.

## Claims

1. An accessory device, comprising:
a main body including a top surface and a bottom surface;
at least one fastener (320) formed in the bottom surface and configured to detachably secure the main body to an electronic device;
a plurality of flexible structures formed in the top surface, each of the plurality deformable in response to external pressure to cause a respective portion of the bottom surface to contact the electronic device, and return to an original shape when the external pressure is removed, said plurality of flexible structures comprising at least one recognition point (330) for generating a touch input on the electronic device from which the electronic device detects a vertical and lateral direction of the accessory on the electronic device; and
at least one of a conductor pattern or Integrated Circuit (IC) disposed within one or more of each of the plurality of flexible structures and the at least one fastener.

2. The accessory device of claim 1, wherein the at least one fastener comprises a plurality of attachment pads and wherein the recognition point (330) is asymmetrically located between two of said attachment pads (320).

3. The accessory device of claim 1, further comprising conductive materials disposed within respective grooves of each of the plurality of flexible structures formed in the top surface, the conductive materials each configured to contact the electronic device when each of the plurality of flexible structures is deformed by the external pressure.

4. The accessory device of claim 1, wherein the plurality of flexible structures are disposed in a pattern of keyboard keys.

5. The accessory device of claim 1, wherein:
a pattern of the plurality of flexible structures comprises a pattern of keyboard keys;
the main body comprises a substantially transparent material; and
visible markings including at least one of characters, numerals, and symbols are disposed on each of the plurality of flexible structures formed in the top surface.

6. The accessory device of claim 1, further comprising a communication module (340) which stores product information of the accessory and which is provided to transmit said product information to the electronic device.

7. The accessory device of claim 6, wherein the communication module (340) stores an application list of applications with which the accessory is operable and wherein the communication module is provided to transmit said application list to the electronic device.

8. A method in an electronic device, comprising:
when an accessory according to any one of claims 1-7 is mounted on a touch screen of the electronic device, detecting by a processor of the electronic device a location of the accessory on the touch screen based on a touch input generated by means of said at least one recognition point (330) of the accessory; and
displaying on a display of the electronic device a virtual keypad in the detected location of the accessory.

9. The method of claim 8, further comprising the step receiving on the electronic device product information of the accessory, which is stored and transmitted by the communication module (340).

10. The method of claim 9, further comprising the step of receiving on the electronic device an application list of applications with which the accessory is operable, the application list being stored and transmitted by the communication module (340).

11. The method of claim 8, further comprising altering a configuration of a user interface displayed on the touch screen according to the displayed virtual keypad in the detected location of the accessory.

12. The method of claim 8, further comprising disabling touch inputs to the touch screen for areas of the touch screen outside the detected location of the accessory.

13. The method of claim 11, further comprising:
detecting a touch input to a key of the virtual keypad generated by deformation of the at least one physical key; and
in response to the touch input, executing a function corresponding to the key of the virtual keypad.

14. The method of claim 12, further comprising:
detecting a touch input to a key of the virtual keypad generated by deformation of the at least one physical key; and
in response to the touch input, transmitting information related to the touch input to the key of the virtual keypad to an external electronic device.

15. The method of claim 8, further comprising:
detecting an approach of the accessory to the touch screen; and
in response to the detected approach, displaying the virtual keypad according to the detected approach.

16. The method of claim 8, further comprising:
when the accessory is mounted on the touch screen, changing a configuration of a displayed screen on the touch screen according to the detected location of the accessory and locking a screen rotation function for the touch screen.

17. The method of claim 8, further comprising:
when the accessory is mounted on the touch screen, display on the touch screen a user interface selectable to execute a function of the accessory.
